Europäisches Patentamt

European Patent Office

Office européen des brevets

(19)

(11) **EP 1 376 469 A2**

(12) **EUROPEAN PATENT APPLICATION**

(43) Date of publication:
**02.01.2004 Bulletin 2004/01**

(51) Int Cl.7: **G06T 5/00**, G06T 5/20,
G06T 5/50

(21) Application number: **03013206.2**

(22) Date of filing: **12.06.2003**

| | |
|---|---|
| (84) Designated Contracting States:<br>**AT BE BG CH CY CZ DE DK EE ES FI FR GB GR HU IE IT LI LU MC NL PT RO SE SI SK TR**<br>Designated Extension States:<br>**AL LT LV MK** | (72) Inventors:<br>• **Kita, Koji**<br>  **Wakayama-shi,Wakayama-ken (JP)**<br>• **Watanabe, Kazumi**<br>  **Wakayama-shi,Wakayama-ken (JP)** |
| (30) Priority:  **27.06.2002 JP 2002187334** | (74) Representative: **Kaiser, Magnus et al**<br>**Lemcke, Brommer & Partner**<br>**Patentanwälte**<br>**Postfach 11 08 47**<br>**76058 Karlsruhe (DE)** |
| (71) Applicant: **NORITSU KOKI CO., LTD.**<br>**Wakayama-shi, Wakayama-ken (JP)** | |

(54) **Method and system for providing a soft tone effect to a digital or digitised image**

(57)     An image processing system for correcting digital image data read from a photographic medium. This system includes a diffusing process unit (23) for effecting a diffusing process on an original image composed of the digital image data, thereby to generate a diffused image, and an image correcting unit (25) for generating a corrected image by effecting synthesis between the original image and the diffused image. The system further includes a synthesizing coefficient calculating unit (24) for calculating a synthesizing coefficient for each pixel of the diffused image by using a pixel value of the diffused image as a parameter. The image correcting unit (25) generates the diffused image by effecting the synthesis between the original image and the diffused image according to the synthesizing coefficient. In this, the synthesizing coefficient determines a ratio of the pixel value of the diffused image relative to the pixel value of the corrected image.

FIG.2

EP 1 376 469 A2

## Description

## Background of the Invention

### Field of the Invention

The present invention relates to an image processing method and system for correcting digital image data read from a photographic medium such as a photographic film or a semiconductor memory by effecting a filtering process on the data, thereby to obtain corrected digital image data of superior photographic image quality.

### Description of the Related Art

As is known, in a photography, in order to obtain a soft tone image, the photographic operation is effected with attaching a soft tone effect filter to the lens of a camera or by using a camera attached with a soft focus lens. Incidentally, the soft tone effect filter is a physical component to be attached to the front of the lens system of the camera for shielding light beam of a particular wavelength, the filter being distinct from a filtering process effected in a digital image processing. Also, the soft tone effect filter is characterized in that the it provides subtle optical blurring effect to the image and it has a center of focus in the soft-focused image expression. A variety of such soft tone special effect filters are commercially available under the trade names of e.g. "DUTO" "SOFTON", "FOGGY", "SOFT CROSS", etc.

However, when such soft tone effect filter is to be used, for each particular photographic occasion, an appropriate type of filter needs to be selected, thus requiring frequent change of the filter. For this reason, the soft tone effect filters do not have high practical utility. Hence, there has been a need for means capable of obtaining soft tone photographic images by a simple and convenient method.

In recent years, in the field of photographic processing, there has been increasing popularity of a new type of photographic processing by the so-called digital exposure, wherein photographic data from e.g. a photographic film is read in the form of digital image data by means of an image pick-up device such as a CCD and an exposure head of a printer prints an image on a print paper based on the digital image data. Such digital exposure provides possibility of subjecting the digital image data to a variety of image processing. One of them is a filtering process using a diffusion filter (to be referred to as "diffusing process" hereinafter). With this process, it is possible to provide a soft tone effect to an image reproduced from the digital data. Therefore, it will be convenient if a soft tone image like one conventionally obtainable by either using a soft tone effect filter or a soft focus lens with the camera can be obtained also by effecting such diffusing process to the digital image data.

In the above respect, according to a technique disclosed in the Japanese Patent Application "Kokai" No.: Hei. 11-284860 a dodging mask is generated from an original image and this dodging mask is subjected to a diffusing process. Thereafter, as the original image is synthesized with or added to this dodging mask, there is obtained an image with a desired soft tone (diffusion) effect. This technique requires a complicated series of procedure to make the dodging mask. Therefore, in order to achieve high-speed operation, it is proposed that the dodging mask be first reduced ("thinned out") and the diffusing process be effected on this reduced image (thinned-out image), then, the resultant reduced image be enlarged again to be added eventually to the original image.

However, the inevitable consequence of such enlargement/reduction of the image is deterioration of the digital image data (data deterioration). Namely, since the technique disclosed by the above publication involves synthesis or addition of the original image with the dodging mask after the data deterioration, deterioration of the entire image quality will occur inevitably although the soft tone effect can be added to the image. Therefore, there has been a demand for an improved digital processing technique capable of providing soft tone effect to an image by a process different from that of the technique disclosed by the above publication.

## Summary of the Invention

The present invention has been made to overcome the above problem. A primary object of the invention is to provide a novel image processing technique which makes it possible to obtain a soft tone image of as high as or even higher image quality through the digital image processing without using a soft tone effect filter or soft focus lens in the camera, as compared with a case using such filter or lens.

For accomplishing the above object, according to one aspect of the present invention, there is proposed an image processing method for correcting digital image data read from a photographic medium such as a photographic film (conventional camera) or a semiconductor memory (digital camera), the method comprising the computer-implemented steps of:

effecting a diffusing process on an original image composed of the digital image data, thereby to generate a diffused image; and

generating a corrected image by calculating, for each corresponding pair of pixels of the diffused image and the original image, a pixel value of the original image and a pixel value of the diffused image, based on a synthesizing coefficient provided for each pixel;

wherein said synthesizing coefficient determines a ratio of the pixel value of the diffused image relative to the pixel value of the corrected image.

According to the above method, first, digital image data are read from a photographic medium storing photographic image and a diffusing process is effected on an original image composed from the read digital image data to generate a diffused image. Thereafter, for each corresponding pair of pixels of the diffused image and the original image, a pixel value of the original image and a pixel value of the diffused image are calculated, based on a synthesizing coefficient provided for each pixel, whereby a corrected image is generated. In this, the synthesizing coefficient determines a ratio of the pixel value of the diffused image relative to the pixel value of the corrected image.

Therefore, in the corrected image thus obtained, each pixel thereof is provided with a different diffusion effect, that is, a different soft tone effect. In other words, with this digital image processing method, it is possible to provide a different soft tone effect for each distinct luminance range of the pixel. Consequently, even if a soft tone effect filter or a soft focus lens is not used with the camera, it is possible to obtain a soft tone image equivalent to one obtained by using such filter or lens.

As a simple and preferred method for providing each pixel of the corrected image with a soft tone effect according to its luminance level, it is proposed to set the synthesizing coefficient so that this coefficient has a correlation with the pixel value of the diffused image. This can be done, for instance, by calculating the synthesizing coefficient to be assigned to each pixel by using a function including each pixel value of the diffused image as a parameter thereof.

Incidentally, if the effect obtainable by using a standard soft tone filter is considered, it is preferred that the above correlation be a positive correlation. Here, a "positive correlation" means such a correlation that for a function: f(X), if $X1<X2$, the correlation $f(X1) \leqq f(X2)$ is derived.

According to one preferred embodiment of the present invention,

said synthesizing coefficient: Op {i, j] (in percentage) is determined by the following expression;

$$Op[i,j] = \frac{bdat[i, j]^{Grad}}{Max^{Grad}} \times 100$$

where, bdat [i, j]: a pixel value of the diffused image,

Max:    a possible maximum value of the pixel value of the diffused image, and

Grad:    an arbitrary set value, provided: $Grad>0$

With use of the above expression, by adjusting the value of Grad, a rate of change (slope) of the synthesizing coefficient: Op [i, j} can be adjusted relative to a possible value of the diffused image. That is, for each luminance range, the operator can freely set a different soft tone effect.

In the image processing method of the invention, in addition to the above process, it is also advantageous to set the possible maximum value of the synthesizing coefficient: Op [i, j] to be less than 100%. For, with this setting, all synthesizing coefficients assigned to the respective pixels will be less than 100%, which means that there will exist no single pixel containing 100% of the pixel value of the diffused image. Consequently, when the diffusion effect is too strong, it is possible to restrict occurrence of local loss of white gradation ("white dropout" phenomenon) in the high luminance area in the resultant corrected image.

According to a further preferred embodiment of the invention, an image value range of the diffused image is divided into at least two sub-ranges and the synthesizing coefficient: Op {i, j} for a pixel having a pixel value included in the lowest sub-range is set to 0%. That is, in the corrected image, the ratio of the pixel value of the pixel affecting the pixels of a low luminance area (dark area) can be set to 0%. With this, in the low luminance area, the pixel value of the original image alone can be reproduced in the corrected image. This method is effective for providing enhanced clearness in a dark area in the corrected image (e.g. hair of a woman) when the diffused image has strong whitish blurring.

The image processing method of the present invention is applicable also to a case where the digital image data comprise color image data consisting of respective primary color components. In such case, since the synthesizing coefficient: Op {i, j] to be assigned to each pixel will be different for each color component, it is possible to provide a different soft tone effect to each color component of the image.

For accomplishing the above-noted object, according to a further aspect of the present invention, there is provided an image processing system for correcting digital image data read from a photographic medium such as a photographic film (conventional camera) or a semiconductor memory (digital camera), the system comprising:

a diffusing process unit for effecting a diffusing process on an original image composed of the digital image data, thereby to generate a diffused image;
a synthesizing coefficient calculating unit for calculating a synthesizing coefficient for each pixel of the diffused image by using a pixel value of the diffused image as a parameter; and
an image correcting unit for generating a corrected image by effecting synthesis between the original image and the diffused image according to said synthesizing coefficient;

wherein said synthesizing coefficient determines a ratio of the pixel value of the diffused image relative to the pixel value of the corrected image.

With the above system, it is possible to obtain a soft tone image of superior quality.

In addition to the above, the present invention is directed also to an image processing program which is used as a principal component in realizing the above-described method or system as well as to a medium storing this image processing program.

Further and other features and advantages of the invention will become apparent upon reading the following detailed description of its preferred embodiments with reference to the accompanying drawings.

**Brief Description of the Drawings**

Fig. 1 is a block diagram showing a schematic construction of an image processing system relating to the present invention,
Fig. 2 is a functional block diagram schematically illustrating principal functional blocks of an image processor,
Fig. 3 is a flow chart illustrating a series of procedure of an image processing method relating to the present invention,
Fig. 4 is an explanatory view showing an areas to be referenced by a moving average filter in a diffusing process,
Fig. 5A is a graph showing relationship between a synthesizing coefficient: Op and a pixel value: bdat [i, j] of a corrected image,
Fig. 5B is a graph showing a function obtained by multiplying a power function shown in Fig. 5A by Omax/100 (Omax: maximum value of the synthesizing coefficient),
Fig. 5C is a graph illustrating that in the relationship shown in Fig. 5A between the synthesizing coefficient: Op and the pixel value of the corrected image: bdat [i, j], across a border of: bdat [i, j] = DLim, in one range where bdat [i, j] < DLim, setting is made to obtain Op=0, and in the other range where bdat [i, j] $\geqq$ DLim, the coefficient Op can be obtained by the power function,
Fig. 6 is a schematic showing a diffused image obtained by diffusing an original image and a corrected image obtained by synthesizing the diffused image with the original image, and
Fig. 7 is an explanatory view schematically showing a spatial filter employed in effecting the diffusing process on the corrected image.

**Description of the Preferred Embodiments**

According to the art relating to the present invention, an image processing is effected on original digital image data ("image data" hereinafter) read from e.g. a photographic film, thereby to provide the image with soft tone effect (soft focus effect), which would be obtained when a soft tone effect filter or a soft focus lens were employed with the camera. In the following discussion of the present embodiment, an image output system in which the image processing technique of the invention is implemented will be described first and then, the image processing procedure will be described.

Referring to the accompanying drawings, one embodiment of the invention will be described next.

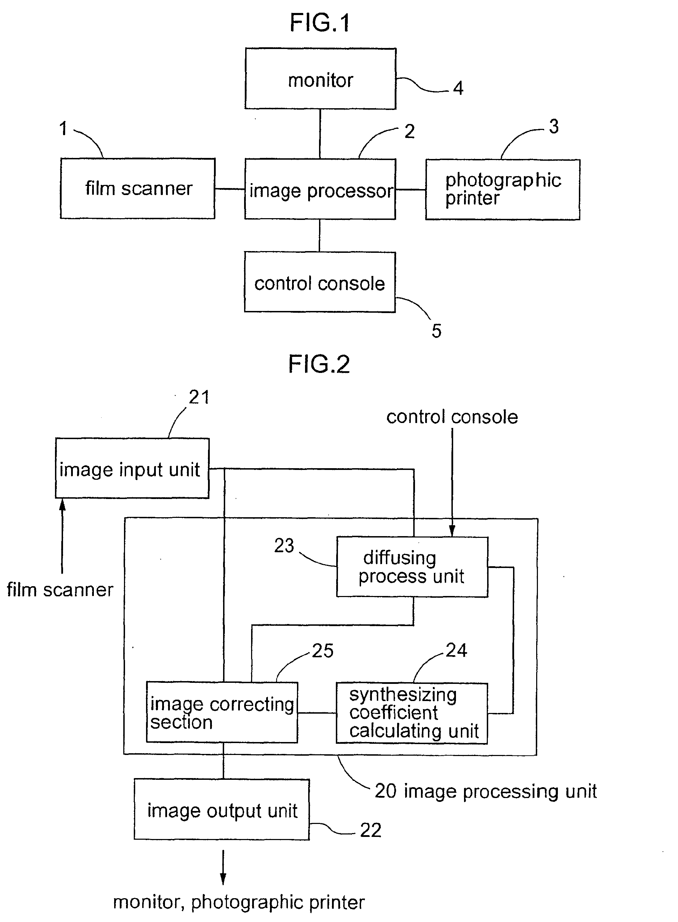

Fig. 1 is a block diagram showing a schematic construction of a photographic printing system embodying the present invention. This system includes a film scanner 1, an image processor 2, a photographic printer 3, a monitor 4 and a control console 5.

The film scanner 1, for instance, irradiates a light from a light source on to a photographic film and then receives its transmission light by means of e.g. a CCD, thereby to read images recorded in respective frames of the photographic film. This film scanner 1 outputs the read image data for each component of red component, green component and blue component to the image processor 2.

The image processor 2 comprises e.g. a PC (personal computer). The processor 2 effects various image processing on the image data received from the film scanner 1 and then feeds the processed high-quality image data to the photographic printer 3. The control console 5 can be a keyboard, a mouse, etc.

The photographic printer 3 as a printer for outputting photographic prints, exposes a print paper as a photosensitive material according to the processed image data received from the image processor 2, thereby to print images on the print paper. As a head for irradiating beam corresponding to the image data on to the print paper, the printer 3 employs an optical modulator, which can be a PLZT exposing head, DMD (digital micro-mirror device), LCD (liquid crystal display), LED (light emitting diode) panel, laser, FOCRT (fiber optic cathode ray tube), CRT (cathode ray tube), etc.

Incidentally, the film scanner 1, the image processor 2 and the photographic printer 3 can be provided as discrete units, or one or more of them may be integrated with the others or the other.

The monitor 4 is used for displaying to an operator an image read by the film scanner 1, image being under image processing, image after the image processing, an operational condition of the system, etc.

Fig. 2 is a functional block diagram schematically illustrating principal functions of the image processor 2. As shown, the image processor 2 includes an image input unit 21 for receiving digital image data of a photographic image from the film scanner 1 or a media reader, an image output unit 22 for outputting final image data after the image processing to the monitor 5 and/or the photographic printer 3, and an image processing unit 20 for effecting the image processing. The image processing unit 20 includes, as its principal functional blocks pertinent to the present invention, a diffusing process section 23 for effecting a diffusing process on the original image received as the digital image data thereby to generate a diffused image, a synthesizing coefficient calculating section 24 for obtaining a synthesizing coefficient for each pixel of the diffused image with using a pixel value of the diffused image as a parameter, and an image correcting section 25 for effecting synthesis of the original image and the diffused image according to the synthesizing coefficient, thereby to generate a corrected image. These functions will be described in greater details later.

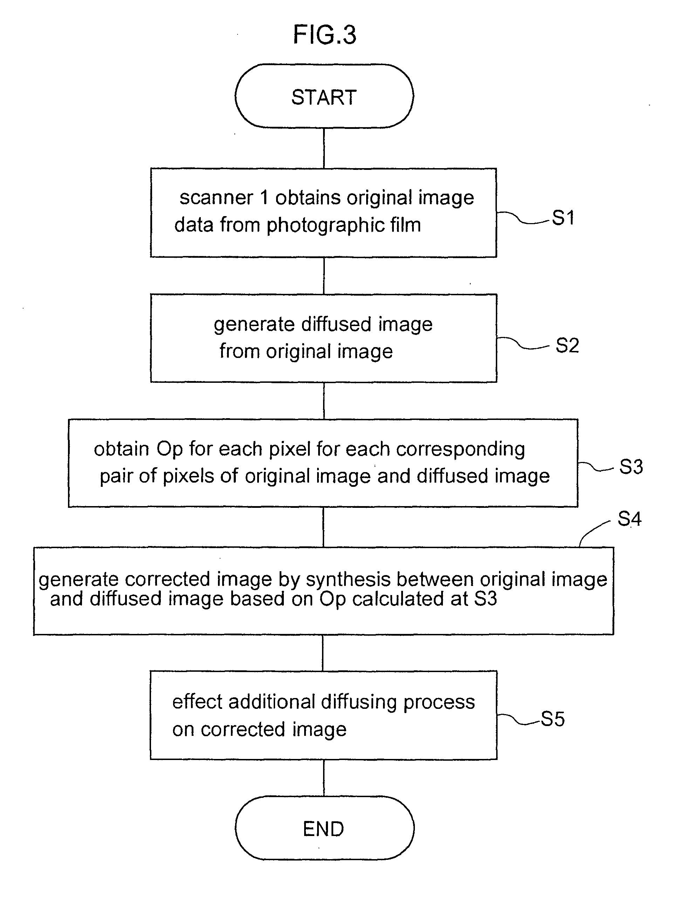

Now, with reference to a flow chart of Fig. 3, there will be schematically described an image processing procedure according to the invention to be effected by the image processor 2 with using a photographic film as a photographic image source. First, the film scanner 1 reads and obtains original image data from an image of each frame recorded in the photographic film and transmits this original image data to the image processor 2 (S1). Here, the read original image data has a number of pixels of about 1024 x 1534 for each of R, G and B component. The invention, however, is not limited to this particular construction. The image processing unit 20 stores this received original image data within an unillustrated memory thereof. And at its diffusing process section 23, the processing unit 20 then effects a diffusing process on an original image generated at the diffusing process section 23 from the original image data, thereby to obtain a diffused image (S2).

Further, the image processing unit 20, at its synthesizing coefficient calculating section 24, calculates a synthesizing coefficient: Op [i, j] from the image data of the diffused image (S3). This synthesizing coefficient is obtained for each pixel and represents a ratio of the pixel value of the diffused image relative to or contained within an image value of each pixel of the corrected image to be generated at step S4 (synthesis of the original image and the diffused image). This coefficient can be referred to also as an "opaqueness" or "fusion" coefficient. Thereafter, based on a value of this synthesizing coefficient: Op [i, j], (to be referred to simply as Op hereinafter), the image processor 2 effects, at is image correcting section 25, the synthesis between the original image and the diffused image, thereby to generate the corrected image (S4). Further, the image processor 2 effects an additional diffusing process on any portion present in the corrected image where sharpness still remains (S5). With this, the process is completed. The image processing operation relating to the present embodiment is carried out in the manner described above. In this operation, the steps S2 through S5 are the characterizing portions of the embodiment. Therefore, these steps will be described in greater details next.

### <generation of diffused image: S2>

The diffused image is obtained here by effecting a diffusing process by using a filter on all of the pixels constituting the original image data. The filter employed here is a moving average filter which is one type of spatial filter having n-dimension square matrix.

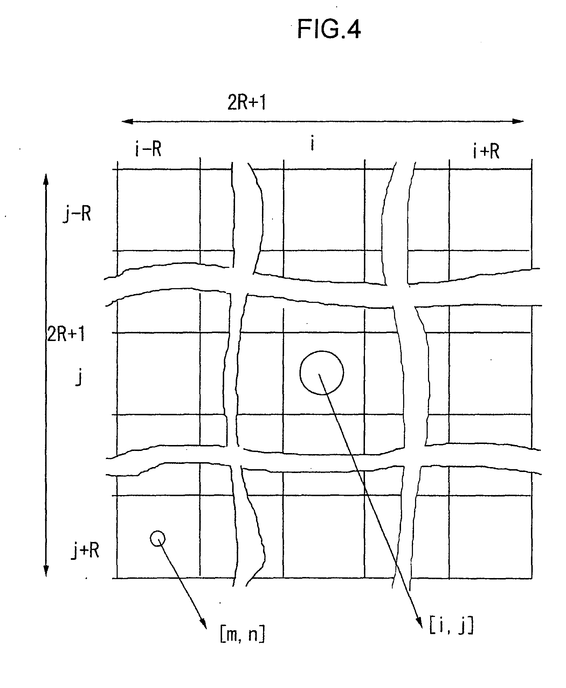

The diffusing process refers to a process wherein for an area referenced by the spatial filter, an average of pixel values of pixels surrounding a "focal" (center) pixel of interest is obtained as the pixel value of this focal pixel. Alternatively, the pixel value of the focal pixel can be obtained with providing a "weight" relative to the focal pixel to each of its surrounding pixels. Next, this diffusing process will be described more particularly with reference to Fig. 4.

Fig. 4 shows an area referenced by the spatial filter of the original image generated from the original image data. In this particular embodiment, the filter comprises a moving average filter having dimensions: $(2R + 1) \times (2R + 1)$. And, the center of this filter area is provided as the focal pixel shown as [i j]. And, for the focal pixel: [i, j], the pixel value for each focal pixel after the diffusing process can be obtained from the following expression:

$$bdat[i,j] = \frac{\sum\limits_{n=j-R}^{j+R} \sum\limits_{m=i-R}^{i+R} W[m,n] \times sdat[m,n]}{\sum\limits_{n=j-R}^{j+R} \sum\limits_{m=i-R}^{i+R} W[m,n]}$$

where,

bdat [i, j]: pixel value of each pixel after the diffusing process (pixel value of diffused image)

sdat [m, n]: pixel value of referenced pixel prior to the diffusing process,

W [m, n]: weight for each pixel.

Marks: m, n denote respective coordinate values of [m, n] of each referenced pixel prior to the diffusing process. The weight: Wmn for each pixel is determined by the type of the spatial filter employed, such as a moving average filter, Gaussian distribution weighted average filter, power weighted average filter, etc.

In the case of the moving average,

$$Wmn = 1$$

In the case of Gaussian distribution function,

$$W_{mn} = \frac{ar^2}{e(R+1)^2}$$

In the case of power function,

$$W_{mn} = 1.0 - r^b / (R+1)^b$$

$$r = \sqrt{(i-m)^2 + (j-n)^2}$$

a: arbitrary coefficient

b: arbitrary coefficient

Incidentally, a mark: r denotes a distance between each pixel and the focal pixel. Further, in the above-described scheme, the focal pixel comprises the center of the referenced area. The invention, however, is not limited to this particular construction.

In the above, in the case of the moving average filter, the values of Wmn are all 1, so that the weights for the respective pixels are constant. In the case of the Gaussian distribution weighted average filter, the closer a pixel to the focal pixel, the greater the weight to be added to that pixel. In the case of the power weighted average filter, for adjacent pixels present in the diffused image, it is possible to vary the strength of the soft tone effect to be provided thereto. Consequently, it is possible to avoid such inconvenience as blurring or fuzzing out of image of a small subject in the photography due to the diffusing process.

**<synthesis between original image and diffused image: S4>**

Next, the process for generating the corrected image by adding the diffused image obtained at S2 to the original image ("synthesizing process" hereinafter) will be described. First, the original image data is retrieved from the unillustrated memory. Then, for each corresponding pair of pixels of the original image and the diffused image, a pixel value is calculated (corrected) by average color mixing technique from the pixel value of the original image (image data) and the pixel value of the diffused image and this calculated pixel value is set as the pixel value of the corresponding pixel. In this, for each pixel, if the pixel value of the original image is sdat [i,j], and the pixel value of the diffused image is dbat [i, j], the corrected pixel value is obtained by the following expression:

$$ndat[i,j] = bdat[i,j] \times \frac{Op[i,j]}{100} + sdat[i,j] \times \frac{(100 - Op[i,j])}{100}$$

### <calculation of Op, S3>

As described hereinbefore, Op [ij] is the synthesizing coefficient assigned to each pixel for use in the synthesizing process. And this coefficient represents a ratio (in percentage) of the pixel value of the diffused image (image data) to be contained within or relative to the pixel value (image data) of each pixel constituting the corrected image. This each synthesizing coefficient: Op is calculated in advance prior to the synthesis effected at the synthesizing coefficient calculating section 24 by means of the power function described below. In the case of the following expression employed in the instant embodiment, the synthesizing coefficient: Op is calculated according to the pixel value (luminance level) of the diffused image. With such calculation scheme, it is possible to vary the synthesizing coefficient to be assigned to each pixel, according to the pixel value of the diffused image. Therefore, in the corrected image, it is possible to provide a variable degree of soft tone effect to each pixel, which varies according to the luminance level of each pixel of the diffused image.

$$Op[i,j] = \frac{bdat[i,j]^{Grad}}{255^{Grad}} \times 100$$

bdat [i, j]: pixel value of each pixel after diffusing process
Grad: arbitrary value

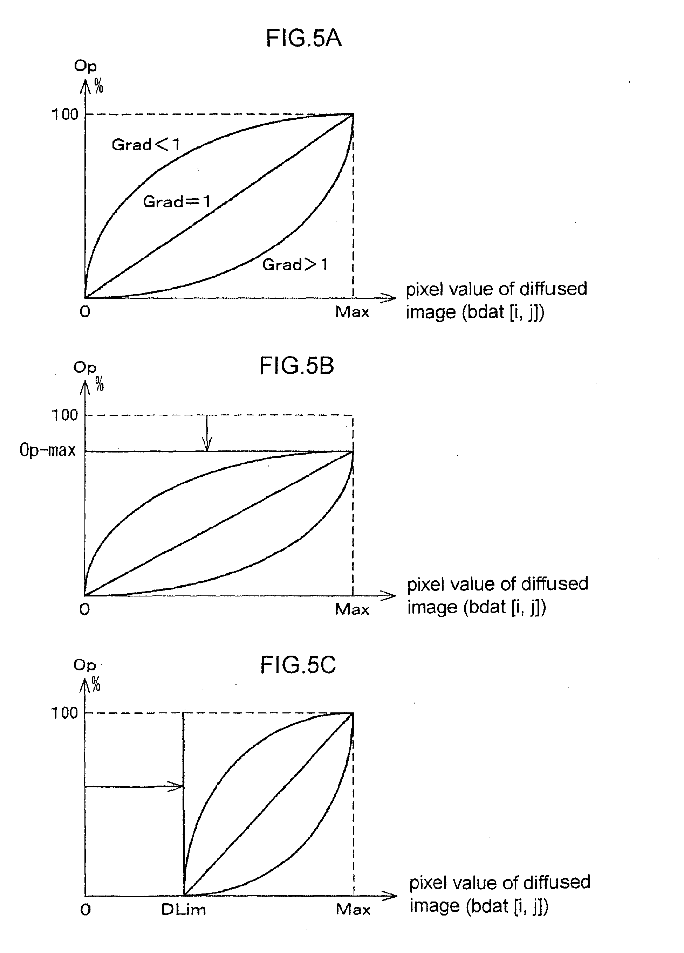

where, Grad is a constant arbitrarily set by the user, with provision of Grad > 0.
Further, although the above calculation expression represents a case of the maximum gradation of the image data being 255, the invention is not limited thereto. For instance, in the case of the maximum gradation of the image data being 65535, the denominator of the above fractional expression will be: "65535 to the Grad-th power (65535 $^{Grad}$)". That is, when Op [i, j] is calculated by the above-described function, if bdat [i, j] is 0, Op [i, j] is set to 0%, whereas, if bdat [i, j] is the maximum pixel value (maximum gradation), Op [i, j] is set to 100%. Further, by adjusting the value of Grad, the rate of change in Op [i, j] can be adjusted relative to change in bdat [i, j].
Further for each pixel, the relationship between bdat [i, j] and Op [i, j] can be represented by the graph shown in Fig. 5A. Here, according to this graph, Op [i, j] assigned to a pixel having a maximum value of bdat [i, j], Op [i, j] ("Op-max" hereinafter) is 100%, meaning that the pixel value of the original image is not to be contained in the pixel after the synthesis. Therefore, in order to allow the pixel values of the original image to be reflected in all the pixels constituting the image after the synthesis, it is necessary to set Op-max less than 100%.
Here, in this embodiment, provided that the function represented by the above expression is F (bdat [i, j]), a function can be obtained by multiplying this F(bdat[i, j]) by Op-max/100 as an operational expression for obtaining Op [i, j] and the resultant function can be provided in the form of a table. Fig. 5B shows a graph of the function thus obtained. With this, it is possible to render all of Op[i, j] to be assigned to the respective pixels less than 100%. Consequently, it becomes possible to restrict occurrence of local loss of white gradation ("white dropout") in the high luminance area in the corrected image.
Further, according to the graph of either Fig. 5A or Fig. 5B, in the area: bdat[i, j] > 0, Op[i, j] > 0. That is to say, the image date of the diffused image will be reflected in almost all the pixels constituting the synthesized image. However, if the diffused image generated by the process of S2 has too strong whitish blur, this whitish blur will adversely affect the dark portion in the corrected image. Then, according to the present embodiment, as shown in Fig. 5C, the operator sets a desired limit pixel value: DLim for bdat [i, j], and also the area (coordinate space) defined by bdat [i, j] is divided into a sub-area which satisfies: bdat [i, j] ≧ DLim and a further sub-area which satisfies: bdat [i, j] < DLim. And, for the latter sub-area (low luminance area) of: bdat [i, j] < DLim, Op [i, j] =0 is set, whereas for the former sub-area (high luminance area) of: bdat [i, j] ≧ DLim, Op [i, j] > 0 is set. That is to say, the power function shown in Fig. 5A is compressed into the sub-area of dbat [i, j] = DLim. With this, of the pixels constituting the corrected image, for the pixels having the pixel values of the diffused image less than or equal to DLim, the pixel values of the diffused image are not reflected in the corrected image. Hence, in the low-luminance area (dark area) in the corrected image, the original image data can be reflected with high fidelity. So that, even when the whitish blur is strong, the image of the photographic subject constituting the dark portion can be reproduced with greater clarity. Incidentally, in the above-described process, the area defined by: bdat [i, j] is divided into the sub-area: bdat [i, j] ≧ Dlim and the further sub-area: bdat [i, j] < DLim. Instead, it is also possible to divide the range of the possible values of the diffused image (the range defined by bdat [i, j]) into three sub-areas or more, with setting Op [i, j] to 0% in the lowest sub-area of them.

**<diffusing process of corrected image, S5>**

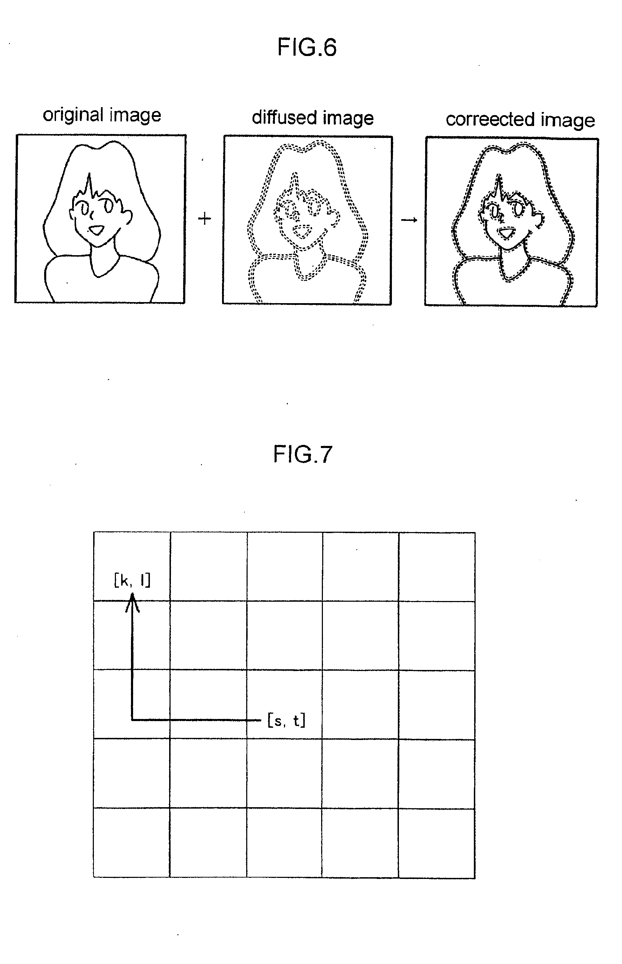

Further, in the corrected image synthesized from the original image and the diffused image, it often happens that although the contrast of the respective pixels is reduced, the contour of the photographic subject remains almost the same as before, with sharpness (distinct contour of the image) remaining partially. For instance, as shown in Fig. 6, in the case of an image formed by synthesizing an original image of a woman with black hair as a photographic subject with a diffused image of this original image, the contour of the black hair may remain in the corrected image.
In such case, by viewing the monitor 4, the operator will specify the area where such sharpness remains, so that the image processor 2 effects a additional diffusing process only on the specified area with the spatial filter (S4). As such spatial filter, for example, as shown in Fig. 7, there is employed a filter for obtaining pixel values of the respective pixels by the following calculation. In this, if the pixel value of each pixel: [k, l] is f [k, l] and the center (focal) pixel of the area referenced by the filter is [s, t]; then,

$$f[k,l] = \frac{Ic}{dcr \times (|s\text{-}k| + |t\text{-}l|)}$$

Ic: center intensity
dcr: attenuation factor (0 < dcr <1)

where the center intensity and the attenuation factor are parameters to be arbitrarily set by the operator. Incidentally, these center intensity and attenuation factor are determined so that the farther the periphery of the filter from the center of the filter, the smaller the coefficient of the filter. That is to say, according to the above-described filtering process, for each pixel in the area referenced by the filter, the image processor 2 gives a pixel value which differs depending the distance from that pixel to the focal pixel and these pixel values are progressively decreased with increase in the distance from each pixel from the focal pixel. By effecting such process, the image processor 2 can eliminate sharpness, i. e., can diffuse the contour of the subject image only in the area in the synthesized image specified by the operator.
The image obtained by executing the process of S1 through S4 has a high soft tone effect. Namely, by effecting the process of the steps S1 through S4 on a digital image read from a photographic film, it is possible to obtain a soft tone image equivalent to one conventionally obtainable when a photographic operation is carried out with attaching a soft tone effect filter to the lens of the camera or using a soft focus lens in the camera.
Incidentally, in the synthesizing process of S3, for each corresponding pair of pixels of the original image and the diffused image, the pixel value is calculated by the average color mixing method. Alternatively, the pixel value can be calculated by the additive color mixing method. In this case, the pixel value will be calculated by the following operation expression.

$$ndat[i,j] = \left( bdat[i,j] + sdat[i,j] - \frac{bdat[i,j] \times sdat[i,j]}{255} \right) \times \frac{Op[i,j]}{100}$$
$$+ sdat[i,j] \times \frac{(100 - Op[i,j])}{100}$$

Further, the synthesizing coefficient: Op [i, j] to be set for each pixel can have a different value for each color component for a same pixel. With this method, the soft tone effect in the synthesized image can be controlled separately for each color component. Consequently, a color variation which would be obtained by attaching a filter to a camera can be reproduced by the digital image processing technique.
Further, the above-described specific procedure employed for executing the diffusing process of S2 and S4 is a non-limiting example of the invention. The invention may employ any other process as long as such other process too can enhance the soft tone effect of the image.
Also, the image processing technique of this embodiment can be applied to both a color image and a monoclonal image.
Moreover, with the above-described process, the synthesizing coefficient is calculated from the pixel value of the diffused image by using the power function. The invention, however, is not limited thereto. Any other function can be used instead as long as a correlation is established between the synthesizing coefficient and the pixel value of the diffused image.
Further, in the process of generating a diffused image at S2, the moving average filter is employed so as to restrict the amount of calculation required for the diffusing process. With this, at S2, there is no need to effect the diffusing process after the image is thinned out (reduction and enlargement). That is to say, at this step S2, the diffusing process can be effected without inviting image quality deterioration.

Incidentally, the procedure described in the foregoing embodiment can be realized in the form of a computer program. And, this computer program will be stored in a computer-readable storage medium. In the case of the present invention, this storage medium can be the unillustrated memory (e.g. ROM per se) required for the process executed at the image processor 2. Or, though not shown, it can be a program recording medium to be inserted into a program reader device as an external storage unit so that its program may be loaded into the device upon the insertion.

In any of the cases above, it is possible to adapt the stored program to be executable when accessed by a microprocessor (not shown). Or, it is also possible to adapt the program to be executed when this program is read from the medium and then this read program is downloaded to an unillustrated program storing area of the microprocessor. In this case, a program required for the downloading operation will be stored in advance in the main body of the device.

In the above, the program medium described above refers to a recording medium detachable to a main device body and this medium can fixedly storing the program therein, such as the tape type media as a magnetic tape or cassette tape, a disc type media such as magnetic discs including a floppy (registered trademark) disc, a hard disc, etc, as well as optical discs including CD-ROM, MO, MD, DVD, etc, the card type media such as IC card (including a memory card) or an optical card, or the semiconductor memory devices including a mask ROM, EPROM, EEPROM, flash ROM, etc.

Also, since the system of the invention is connectable with a communication network including the Internet, the medium can also be a medium capable of "flexibly" storing the program such as a medium to which the program can be downloaded via the communication network. Incidentally, in case the program is to be downloaded from a communication network, a program needed for such download operation may be stored in advance in the main device body or can be installed to the device from another recording medium.

Lastly, the present invention is not limited by the above-described embodiments, but can be subjected to various changes or modifications within the scope of the invention defined in the appended claims.

**Claims**

1. An image processing method for correcting digital image data read from a photographic medium,
   **characterized by** the computer-implemented steps of:

   effecting a diffusing process on an original image composed of the digital image data, thereby to generate a diffused image; and
   generating a corrected image by calculating, for each corresponding pair of pixels of the diffused image and the original image, a pixel value of the original image and a pixel value of the diffused image, based on a synthesizing coefficient provided for each pixel,;

   wherein said synthesizing coefficient determines a ratio of the pixel value of the diffused image relative to the pixel value of the corrected image.

2. The method according to claim 1, **characterized in that** the synthesizing coefficient has a correlation with the pixel value of the diffused image.

3. The method according to claim 1, **characterized in that** said synthesizing coefficient: Op {i, j] (in percentage) is determined by the following expression;

$$\text{Op } [i,j] = \frac{\text{bdat}[i, j]^{\text{Grad}}}{\text{Max}^{\text{Grad}}} \times 100$$

   where, bdat [i, j]: a pixel value of the diffused image,

   Max: a possible maximum value of the pixel value of the diffused image, and
   Grad: an arbitrary set value, provided: Grad>0

4. The method according to any one of claims 1-3, **characterized in that** the possible maximum value of the synthesizing coefficient: Op [i, j] is set to be less than 100%.

5. The method according to claim 2 or 3, **characterized in that** an image value range of the diffused image is divided into at least two sub-ranges and the synthesizing coefficient: Op {i, j} for a pixel having a pixel value included in the lowest sub-range is set to 0%.

6. The method according to any one of claims 1-5, **characterized in that** said digital image data comprise color image data composed of a plurality of primary color components.

7. An image processing system for correcting digital image data read from a photographic medium, with:

a diffusing process unit for effecting a diffusing process on an original image composed of the digital image data, thereby to generate a diffused image; and
an image correcting unit for generating a corrected image by effecting synthesis between the original image and the diffused image;

**characterized in that**
the system includes a synthesizing coefficient calculating unit for calculating a synthesizing coefficient for each pixel of the diffused image by using a pixel value of the diffused image as a parameter; said image correcting unit generates the diffused image by effecting the synthesis between the original image and the diffused image according to said synthesizing coefficient; and said synthesizing coefficient determines a ratio of the pixel value of the diffused image relative to the pixel value of the corrected image.

8. A computer-readable medium having stored thereon computer-executable instructions which when executed perform an image processing method comprising:

effecting a diffusing process on an original image composed of the digital image data, thereby to generate a diffused image; and
generating a corrected image by calculating, for each corresponding pair of pixels of the diffused image and the original image, a pixel value of the original image and a pixel value of the diffused image, based on a synthesizing coefficient provided for each pixel,;

wherein said synthesizing coefficient determines a ratio of the pixel value of the diffused image relative to the pixel value of the corrected image.

## FIG.1

## FIG.2

# FIG.3

```
        ┌─────────────┐
        │    START    │
        └─────────────┘
               │
   ┌───────────────────────────┐
   │ scanner 1 obtains original image  │──── S1
   │ data from photographic film       │
   └───────────────────────────┘
               │
   ┌───────────────────────────┐
   │   generate diffused image         │──── S2
   │   from original image             │
   └───────────────────────────┘
               │
   ┌───────────────────────────────────┐
   │ obtain Op for each pixel for each corresponding │──── S3
   │ pair of pixels of original image and diffused image │
   └───────────────────────────────────┘
               │                              S4
   ┌───────────────────────────────────┐
   │ generate corrected image by synthesis between original image │
   │ and diffused image based on Op calculated at S3 │
   └───────────────────────────────────┘
               │
   ┌───────────────────────────┐
   │ effect additional diffusing process │──── S5
   │ on corrected image               │
   └───────────────────────────┘
               │
        ┌─────────────┐
        │     END     │
        └─────────────┘
```

## FIG.4

## FIG.5A

Op
%

100

Grad<1

Grad=1

Grad>1

0          Max

pixel value of diffused
image (bdat [i, j])

## FIG.5B

Op
%

100

Op-max

0          Max

pixel value of diffused
image (bdat [i, j])

## FIG.5C

Op
%

100

0        DLim        Max

pixel value of diffused
image (bdat [i, j])

## FIG.6

original image          diffused image          correected image

+          →

## FIG.7

[k, l]

[s, t]